(19) Europäisches Patentamt
European Patent Office
Office européen des brevets

(11) **EP 1 660 846 B1**

(12) **EUROPÄISCHE PATENTSCHRIFT**

(45) Veröffentlichungstag und Bekanntmachung des Hinweises auf die Patenterteilung:
**24.12.2014  Patentblatt 2014/52**

(21) Anmeldenummer: **04763799.6**

(22) Anmeldetag: **04.08.2004**

(51) Int Cl.:
***G01F 1/12*** *(2006.01)*

(86) Internationale Anmeldenummer:
**PCT/EP2004/008752**

(87) Internationale Veröffentlichungsnummer:
**WO 2005/019778 (03.03.2005 Gazette 2005/09)**

(54) **ANORDNUNG ZUM GLEICHRICHTEN EINER FLUIDSTRÖMUNG**

ASSEMBLY FOR RECTIFYING A FLUIDIC FLOW

ENSEMBLE POUR REDRESSER UN COURANT FLUIDIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.08.2003  DE 10337675**

(43) Veröffentlichungstag der Anmeldung:
**31.05.2006  Patentblatt 2006/22**

(73) Patentinhaber: **Elster GmbH**
**55252 Mainz-Kastel (DE)**

(72) Erfinder: **LÖTZ-DAUER, Volker**
**65207 Wiesbaden (DE)**

(74) Vertreter: **Zenz**
**Patent- und Rechtsanwälte**
**Rüttenscheider Straße 2**
**45128 Essen (DE)**

(56) Entgegenhaltungen:
**GB-A- 250 804      US-A- 4 404 861**
**US-A- 5 596 152      US-A- 5 880 378**

EP 1 660 846 B1

## Beschreibung

Die Erfindung betrifft eine Anordnung in einer Gasströmung zum Gleichrichten der Gasströmung mit einer gleichrichtenden Vorrichtung in einem Rohrleitungsabschnitt.

Bei einigen Typen von Gasdurchflussmessgeräten, z.B. Turbinenradgaszählern, ist die Genauigkeit des Messergebnisses stark von der Beschaffenheit des ankommenden Strömungsprofils abhängig. Die Kalibrierung des Messgerätes erfolgt in einem ungestörten, quasi voll entwickelten Strömungsprofil. Ein möglichst ungestörtes Strömungsprofil ist daher wesentliche Voraussetzung für ein genaues Messergebnis in der Anwendungsinstallation.

Das Dokument US 4,404,861 offenbart ein Messgerät für Fluidströmungen, bei welchem stromauf von einem Turbinenrad ein Rohrabschnitt mit verjüngtem Querschnitt ausgebildet ist.

Gleichrichtende Vorrichtungen können in eine Rohrleitung eingebaut oder Bestandteil eines Messgerätes sein.

In der Praxis stehen häufig nur kurze Einlaufstrecken hinter störenden Anlagenbauteilen, z.B. Rohrkrümmern oder Druckregelgeräten, zur Verfügung. Aus diesem Grunde wird eine Anordnung der eingangs genannten Art zum Aufbereiten des Strömungsprofils innerhalb des Messgerätes oder separat stromauf desselben benötigt.

Die Wirksamkeit der Gleichrichtung ist z.B. für Turbinenradgaszähler unter anderem in der EN 12261 quantitativ definiert. Hier wird nach zwei standardisierten Vorstörungsarten, einer geringen und einer starken Vorstörung, unterschieden, und der jeweilige Mindestabstand des Messgerätes von der Vorstörung wird ermittelt, um im Vergleich mit der ungestörten Kalibrierung eine maximal zulässige Messabweichung einzuhalten.

Die zur Erzeugung der Vorstörungen verwendeten Testaufbauten bringen zwei wesentliche Merkmale von

Strömungsprofilstörungen hervor, und zwar eine mit einem Drall mit exzentrischer Lage kombinierte Asymmetrie.

Bekannt sind verschiedene Ausführungen von externen gleichrichtenden Vorrichtungen. Hierzu gehören Lochplatten-, Rohrbündel- oder Radialschaufel(Etoile)-Gleichrichter, die in der EN ISO 5167 beschrieben sind.

Die US 5,596,152 beschreibt eine solche Einrichtung mit Strömungsgleichrichter, wobei eine Scheibe mit konzentrischem Lochmuster in einen Rohrquerschnitt vor einem Turbinenrad eingebracht ist.

Diese bekannten gleichrichtenden Vorrichtungen sind oft nicht für beide Störungskomponenten ausreichend effektiv; teilweise erzeugen sie auch einen unerwünscht hohen Druckverlust. Gleiches gilt für in Gasdurchflussmessgeräte integrierte gleichrichtende Vorrichtungen. Hier greift die Erfindung ein.

Der Erfindung liegt die Aufgabe zugrunde, eine wirksame Gleichrichtung verschiedener Störungskomponenten zu erreichen und dabei nur einen geringen Druckverlust zu verursachen.

Ausgehend von der Anordnung der eingangs genannten Art, sieht die Erfindung zur Lösung dieser Aufgabe vor, dass in der Gasströmung stromauf einer gleichrichtenden Vorrichtung in dem Rohrleitungsabschnitt ein Blendenring derart angeordnet ist, dass das Strömungsprofil im Anströmbereich der gleichrichtenden Vorrichtung eingeschnürt ist und dass der Abstand t des Blendenrings zur gleichrichtenden Vorrichtung nach der folgenden Beziehung bemessen ist:

$$0 < t < E,$$

wobei E die stromab gerichtete axiale Ausdehnung der Einschnürung der Strömung ist.

Der Blendenring weist einen optimierten Abstand t zur gleichrichtenden Vorrichtung auf, der abhängig von der Ausführungsform der gleichrichtenden Vorrichtung ist.

Wenn der Abstand t zu gering ist, wird die Strömung innerhalb der gleichrichtenden Vorrichtung durch Rippen, Rohre, Bohrungen oder ähnliches in Teilströmungen aufgeteilt und es findet kein Ausgleich mehr zwischen ihnen statt. Dadurch wird vor allem die Asymmetrie bis zum Austritt aus der gleichrichtenden Vorrichtung unzureichend gleichgerichtet.

Bei einem zu großen Abstand t wird in der gleichrichtenden Vorrichtung insbesondere die Beschleunigung der Rotation nicht ausgenutzt und ist somit vor allem für die Drallkomponente weniger effektiv.

Beim optimierten Abstand t zwischen den beiden Grenzpositionen 0 und E steigt die gleichrichtende Gesamtwirkung der erfindungsgemäßen Anordnung bis zu einem Maximum an. Der Blendenring erzeugt über den ganzen Umfang eine zum Zentrum des Durchtrittsprofils gerichtete Radialkomponente in der Strömung. Bei rotationssymmetrisch verteilter Axialgeschwindigkeit wird der Massenstrom daher vorübergehend zum Zentrum hin konzentriert und bleibt auch stromab der Blende symmetrisch. Bei asymmetrischer Verteilung der Axialgeschwindigkeit entsteht in der Zone höherer Strömungsgeschwindigkeit eine größere, zum Zentrum gerichtete Radialkomponente. Der Schwerpunkt des Massenstroms wird dadurch zur Mitte hin verschoben und die Asymmetrie reduziert.

Gleichzeitig zwingt die Blende den Drall auf insgesamt kleinere Umlaufbahnen, was für die Drallgleichrichtung von Vorteil ist. Da der Drehimpuls des Dralls erhalten bleibt, nimmt die Tangentialkomponente des Dralls proportional mit der Einschnürung zu. Dadurch steigt die kinetische Energie in der Drallkomponente nach einer quadratischen Funktion mit der Folge einer deutlich höheren Dissipation der Rotationsenergie und einer entsprechend effektiveren Gleichrichtung.

Für den Eintritt der Strömung in die nachfolgende gleichrichtende Vorrichtung ändert sich außerdem der Anströmwinkel.

Die Axialkomponente nimmt quadratisch mit der Einengung des Rohrdurchmessers zu. Zusammen mit dem Anstieg der Tangentialkomponente verkleinert sich der Tangens des Anströmwinkels somit proportional zur Einengung des Rohrdurchmessers.

Dies ist allein betrachtet zwar nachteilig für die Drallgleichrichtung, wird durch die deutlich erhöhte Dissipation aber überkompensiert.

Der Blendenring hat eine axiale Breite b, die vorzugsweise kleiner ist als die in die Strömung ragende Höhe h (h = (D-d)/2, mit D: Außendurchmesser des Blendenringes, d: Innendurchmesser des Blendenringes).

Die Breite b kann aber auch größer als die Höhe h des Blendenringes sein.

In einer bevorzugten Ausführungsform ist vorgesehen, dass der Blendendurchmesser und/oder der axiale Abstand des Blendenringes von der gleichrichtenden Vorrichtung auf die Bauart und Ausbildung der gleichrichtenden Vorrichtung derart abgestimmt sind, dass die Effektivität der Gleichrichtung erhöht und/oder der Druckverlust bei der Gleichrichtung bzw. der bauliche Aufwand der gleichrichtenden Vorrichtung verringert wird. Die Optimierung erfolgt vorzugsweise empirisch.

Alternativ oder zusätzlich kann der Umfang eines Verdrängungskörpers mit der axialen Strömungsrichtung in geringerem Maß zunehmen als bei einer Halbkugelform. Dadurch bleibt der auf kleinere Umlaufbahnen gezwungene Drall länger im achsnahen Bereich, wo der tangentiale Abstand zweier Rippen, bzw. die Sekante einer Rotationslinie, kürzer ist. Es wird so die Drallgleichrichtung in der Regel noch verbessert.

Vorteilhafte Weiterbildungen der Erfindung sind in den Unteransprüchen gekennzeichnet.

Im Folgenden wird die Erfindung anhand von in den Zeichnungen schematisch dargestellten Ausführungsbeispielen näher erläutert.

Fig. 1 zeigt schematisch ein erstes Ausführungsbeispiel einer erfindungsgemäßen Anordnung zum Gleichrichten einer Fluidströmung, wobei die Anströmkanten der Leitrippen in einer Radialebene der Rohrleitung verlaufen, die mit dem Scheitelpunkt der halbkugelförmigen Kalotte des Verdrängungskörpers ausgerichtet ist.

Fig. 2 zeigt schematisch ein zweites Ausführungsbeispiel einer erfindungsgemäßen Anordnung zum Gleichrichten einer Fluidströmung, wobei die Anströmkanten der Leitrippen in einer Radialebene der Rohrleitung verlaufen, die stromauf des Scheitels der halbkugelförmigen Kalotte des Verdrängungskörpers angeordnet ist.

Fig. 3 zeigt schematisch ein drittes Ausführungsbeispiel einer erfindungsgemäßen Anordnung zum Gleichrichten einer Fluidströmung, wobei der Verdrängungskörper der gleichrichtenden Vorrichtung anders geformt ist als in den Ausführungsbeispielen gemäß Fig. 1 und 2.

Fig. 4 zeigt einen Axialschnitt durch eine Kombination eines als Turbinenradgaszähler ausgebildeten Gasdurchflussmessgerätes mit der Gleichrichteranordnung gemäß Ausführungsbeispiel (Fig. 1), die in einem gemeinsamen Gehäuse integriert sind.

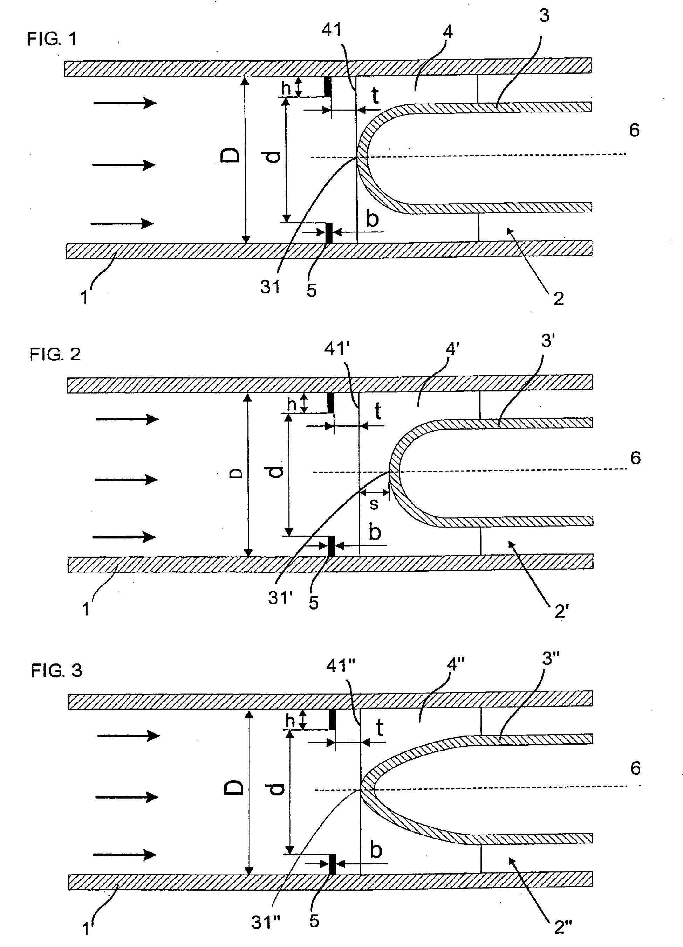

Die Fig. 1 zeigt schematisch einen Rohrleitungsabschnitt 1 mit einer gleichrichtenden Vorrichtung 2 gemäß einem ersten erfindungsgemäßen Ausführungsbeispiel. Die gleichrichtende Vorrichtung 2 weist einen Verdrängungskörper 3 und um den Verdrängungskörper verteilte radiale Rippen 4 auf. Der Verdrängungskörper 3 ist als halbkugelförmige Kalotte mit anschließendem Zylinder ausgebildet. Die stromauf gerichteten Anströmkanten 41 der Rippen 4 verlaufen in einer Radialebene der Rohrleitung 1, die mit dem Scheitelpunkt 31 der halbkugelförmigen Kalotte im Wesentlichen ausgerichtet ist.

Ein Blendenring 5 ist stromauf der gleichrichtenden Vorrichtung 2 in dem Rohrabschnitt derart angeordnet, dass das Strömungsprofil im Anströmbereich der gleichrichtenden Vorrichtung 2 eingeschnürt ist. Der Blendenring 5 hat einen Abstand t von den Anströmkanten 41. Der Abstand t ist so groß, dass der Blendenring die Anströmung optimal beeinflussen kann. Die axiale Breite b des Blendenringes 5 ist in dem Ausführungsbeispiel kleiner als die radial in die Fluidströmung ragende Höhe h des Blendenringes. Die Höhe h des Blendenringes 5 ist mit dem Innendurchmesser D des Rohrabschnitts und dem Innendurchmesser d des Blendenringes durch die folgende Beziehung verknüpft: h = (D-d)/2.

Es ist jedoch auch möglich, dass die Höhe h des Blendenringes 5 kleiner als die Breite b ist. Es ist ebenfalls möglich, dass der Abstand t größer gewählt wird, solange das Strömungsprofil im Anströmbereich der gleichrichtenden Vorrichtung 2 eingeschnürt ist.

In Fig. 2 ist ein zweites Ausführungsbeispiel der erfindungsgemäßen Anordnung dargestellt. Dieses Ausführungsbeispiel unterscheidet sich von dem Ausführungsbeispiel in Figur 1 dadurch, dass die Anströmkanten 41' der radialen Rippen 4' in einer Radialebene der Rohrleitung im Abstand s stromauf des Scheitels 31' des Verdrängungskörpers 3' angeordnet sind. Die durch den Blendenring 5 eingeschnürte Fluidströmung trifft auf die Rippen 4' der gleichrichtenden Vorrichtung 2', bevor sie auf den weiter stromabwärts gelegenen Verdrängungskörper 3' trifft. Dadurch ist die eingeschnürte Strömung einen längeren Strömungsweg der achsnahen Einwirkung der radialen Rippen 4' ausgesetzt, bevor sie von dem Verdrängungskörper 3' auf achsfernere Strömungsbahnen umgelenkt wird. Diese Anordnung wirkt sich je nach Störung der Strömung günstig auf die Gleichrichtung aus.

In Fig. 3 ist ein drittes Ausführungsbeispiel der erfindungsgemäßen Anordnung dargestellt. Es unterscheidet sich von dem Ausführungsbeispiel gemäß Figur 1 durch die Form der Kalotte des Verdrängungskörpers 3". Die Kalotte hat bei diesem Ausführungsbeispiel eine rotationssymmetrische Form, deren Umfang in geringerem Maß zunimmt als bei einer Halbkugelform. Die Krümmung des rotationssymmetrischen Kalottenabschnitts nimmt von der Zentralachse 6 aus in Strömungsrichtung mit zunehmendem Radius des rotationssymmetrischen Kalottenabschnitts ab. Dadurch bleibt die eingeschnürte Strömung auch unter Einwirkung des Verdrängungskörpers 3" über einen längeren Strömungsweg im achsnahen Bereich. Die dort in Umfangsrichtung um die Zentralachse 6 enger stehenden radialen Rippen 4" können die Drallgleichrichtung der Strömung weiter verbessern.

Die gleichrichtende Vorrichtung 2" kann auch derart ausgebildet sein, dass der Verdrängungskörper 3" die beschriebene Form aufweist, die Anströmkanten 41" der radialen Rippen 4" jedoch in einer Radialebene der Rohrleitung im Abstand s stromauf des Scheitels 31" des Verdrängungskörpers 3" angeordnet sind.

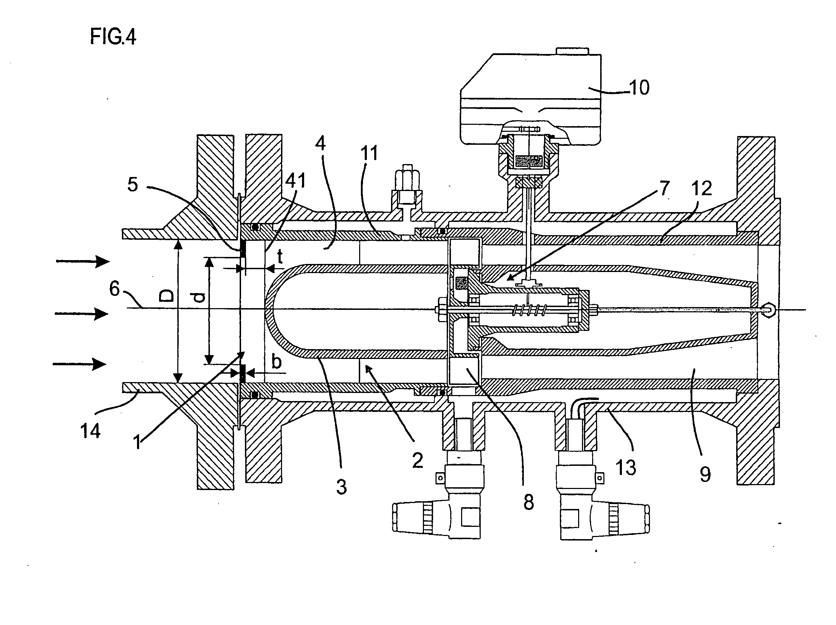

Fig. 4 zeigt einen Axialschnitt durch eine Kombination aus einem Fluiddurchflussmessgerät 7, der strömungsgleichrichtenden Vorrichtung 2 und dem Blendenring 5. Alle genannten Komponenten sind in einem Gehäuse 13 integriert. Das Fluiddurchflussmessgerät 7 ist vom Typ eines Turbinenradgaszählers und weist ein Turbinenrad 8, einen Auslaufkanal 9 und ein Zählwerk 10 auf. In dem Gehäuse 13 sind zwei um die Zentralachse 6 zentrierte Innenzylinder 11, 12 angeordnet, von denen der stromauf gelegene Innenzylinder 11 die gleichrichtende Vorrichtung 2 mit den Komponenten 4, 3 und den Blendenring 5 und der stromab gelegene Innenzylinder 12 die Komponenten des Turbinenradgaszählers 7 aufnimmt. Das Gehäuse 13 ist durch eine Flanschverbindung mit einer stromauf angeordneten Einlaufstrecke 14 verbunden.

Im Rahmen der Erfindung sind zahlreiche Abwandlungen möglich.

Die gleichrichtende Vorrichtung und der Blendenring können auch separat von dem Durchflussmessgerät in einem Rohrleitungsabschnitt angeordnet sein. Ferner braucht der Rohrleitungsabschnitt nicht einteilig ausgebildet zu sein. Eine in axialer Richtung und in radialer Richtung mehrteilige Ausbildung ist ebenfalls möglich.

Auch hinsichtlich der Einlaufstrecke sind abweichende Ausgestaltungen z.B. als Rohrkrümmer möglich.

Die Anströmkanten 41, 41', 41" der Rippen 4, 4', 4" brauchen nicht in einer Radialebene zu liegen, sondern können einen zu der Achse 6 gekrümmten oder schrägen Verlauf haben.

Die erfindungsgemäße Anordnung ist auch unter Verwendung von anderen gleichrichtenden Vorrichtungen einsetzbar.

**Patentansprüche**

1. Anordnung in einer Gasströmung zum Gleichrichten der Gasströmung in einem Rohrleitungsabschnitt (1) mit einem Turbinenrad einer Gasdurchflussmessanordnung wobei stromauf des Turbinenrads in den Rohrleitungsquerschnitt eine gleichrichtende Vorrichtung (2, 2', 2") eingebaut ist, wobei die gleichrichtende Vorrichtung (2, 2', 2") einen rotationssymmetrisch auf der Rohrachse (6) der Einlaufstrecke angeordneten Verdrängungskörper (3, 3', 3") und mehrere über den Verdrängungskörperumfang verteilte radiale Rippen (4, 4', 4") aufweist **dadurch gekennzeichnet,** **dass** stromauf der gleichrichtenden Vorrichtung (2, 2', 2") in dem Rohrleitungsabschnitt ein Blendenring (5) derart angeordnet ist, dass das Strömungsprofil der Gasströmung im Anströmbereich der gleichrichtenden Vorrichtung eingeschnürt ist, so dass der axiale Abstand t des Blendenrings (5) zur gleichrichtenden Vorrichtung (2, 2', 2") nach der folgenden Beziehung bemessen ist:

$$0 < t < E,$$

wobei E die stromab gerichtete axiale Ausdehnung der Einschnürung der Strömung ist.

2. Anordnung nach Anspruch 1, **dadurch gekennzeichnet, dass** der Blendenring (5) eine axiale Breite b aufweist, die kleiner ist als die radial in die Gasströmung ragende Höhe h des Blendenringes.

3. Anordnung nach einem der Ansprüche 1 bis 2, **dadurch gekennzeichnet, dass** die gleichrichtende Vorrichtung (2, 2', 2") sowie der Blendenring in ein Gehäuse (13) integriert sind.

**Claims**

1. An assembly in a gas flow for rectifying the gas flow in a pipeline section (1) with a turbine wheel of a gas flow measuring assembly, wherein a rectifying device (2, 2', 2") is installed in the pipeline cross section upstream of the turbine wheel, wherein the rectifying device (2, 2', 2") exhibits a displacement body (3, 3', 3") arranged rotationally symmetrically on the pipe axis (6) of the inlet section and a plurality of radial ribs (4, 4', 4") distributed over the periphery of the displacement body, **characterized in** **that** an aperture ring (5) is arranged upstream of the rectifying device (2, 2', 2") in the pipeline section, in such a manner that the flow profile of the gas flow is constricted in the flow-in region of the rectifying device, so that the axial distance t between the aperture ring (5) and the rectifying device (2, 2', 2") is measured according to the following relationship:

$$0 < t < E,$$

wherein E is the axial extension of the flow constriction directed downstream.

2. The assembly according to claim 1, **characterized in that** the aperture ring (5) has an axial width b that is smaller than the height h of the aperture ring projecting into the gas flow.

3. The assembly according to one of the claims 1 to 2, **characterized in that** the rectifying device (2, 2', 2") and also the aperture ring are integrated in a housing (13).

**Revendications**

1. Ensemble dans un flux de gaz pour redresser le flux de gaz dans un tronçon de conduite tubulaire (1) avec une roue de turbine d'un ensemble de mesure de débit de gaz, un dispositif de redressage (2, 2', 2') étant monté en amont de la roue de turbine dans la section de conduite tubulaire, le dispositif de redressage (2, 2', 2') présentant un corps de refoulement (3, 3', 3') disposé en symétrie de rotation sur l'axe tubulaire (6) du trajet d'entrée et plusieurs nervures radiales (4, 4', 4') réparties sur la périphérie du corps de refoulement,
caractérisé
en ce qu'un anneau obturateur (5) est mis en place en amont du dispositif de redressage (2, 2', 2'') dans la section de conduite tubulaire de manière à ce que le profil d'écoulement du flux de gaz soit étranglé dans la zone d'afflux du dispositif de redressage, de sorte que l'écartement axial t entre l'anneau obturateur (5) et le dispositif de redressage (2, 2', 2'') soit mesuré conformément au rapport suivant :

$$0 < t < E,$$

E étant l'extension axiale orientée vers l'aval de l'étranglement du flux.

2. Ensemble selon la revendication 1, **caractérisé en ce que** l'anneau obturateur (5) présente une largeur axiale b, laquelle est inférieure à la hauteur h se dressant radialement dans le flux de gaz de l'anneau obturateur.

3. Ensemble selon l'une des revendications 1 à 2, **caractérisé en ce que** le dispositif de redressage (2, 2', 2') ainsi que l'anneau obturateur sont intégrés dans un boîtier (13).

FIG. 1

FIG. 2

FIG. 3

FIG.4

**IN DER BESCHREIBUNG AUFGEFÜHRTE DOKUMENTE**

**In der Beschreibung aufgeführte Patentdokumente**

- US 4404861 A
- US 5596152 A